# EUROPÄISCHE PATENTSCHRIFT

(11) **EP 3 077 094 B1**
(45) Veröffentlichungstag und Bekanntmachung des Hinweises auf die Patenterteilung: **22.11.2017**
(21) Anmeldenummer: 14811811.0
(22) Anmeldetag: 04.12.2014
(51) Int. Cl.: B01F 7/00, B01F 13/00, A61C 9/00, B05C 17/005

(54) **DYNAMISCHER MISCHER UND SEINE VERWENDUNG**
DYNAMIC MIXER AND USE THEREOF
MÉLANGEUR DYNAMIQUE ET UTILISATION DUDIT MÉLANGEUR

(30) Priorität: 04.12.2013 DE 202013009790 U
(43) Veröffentlichungstag der Anmeldung: 12.10.2016
(73) Patentinhaber: Mühlbauer Technology GmbH, 22547 Hamburg (DE)
(72) Erfinder: LAMOTT, Karsten, 22523 Hamburg (DE)
(74) Vertreter: Glawe, Delfs, Moll
(86) Internationale Anmeldenummer: PCT/EP2014/076582
(87) Internationale Veröffentlichungsnummer: WO 2015/082620

(56) Entgegenhaltungen:
- EP-A1- 1 110 599
- EP-A2- 0 291 819
- WO-A1-2009/033832
- WO-A1-2012/116883
- DE-A1- 3 611 048
- DE-A1-102004 020 410

## Beschreibung

Die Erfindung betrifft einen dynamischen Mischer für viskose Massen, insbesondere für Komponenten von zahnärztlichen Abdruckmassen sowie dessen Verwendung für zahnärztliche Abdruckmassen.

Aus der EP 0 492 412 B ist bekannt, an einem Gerät zum Ausbringen der zu mischenden Komponenten einen dynamischen Mischer anzuschließen, der an seinem einen Ende eine Auslassöffnung für das Gemisch aufweist. Er umfasst ein Mischrohr, einen darin drehbar gelagerten und antreibbaren Rotor, der mit dem Mischrohr einen im Querschnitt ringförmigen Mischkanal begrenzt, sowie eine Stirnwand mit Einlassöffnungen, durch die die zu mischenden Komponenten in den Mischkanal gelangen. Der Rotor weist Mischflügel auf, die die den Mischkanal durchströmenden Komponenten miteinander verrühren sollen.

Dabei ist auch bekannt, eine der Einlassöffnungen, durch die bei typischerweise ungleichen Verhältnissen der einzelnen zu mischenden Komponenten eine größere Menge der einen Komponente hindurchtreten soll, mit einem größeren Querschnitt als diejenigen Einlassöffnungen, durch die eine kleinere Menge der anderen Komponenten hindurchtreten soll, zu versehen. Entsprechendes ist u. a. in EP 1 110 599 A1 offenbart.

EP 1 110 599 A1 offenbart auch einen dynamischen Mischer entsprechend dem Oberbegriff des Anspruchs 1.

Die Komponenten zahnärztlicher Abdruckmassen weisen unterschiedliches Fließverhalten auf. Um die vorgesehene Abdruckqualität sowie vorgegebene Verarbeitungs- und Erhärtungszeiten zu gewährleisten, muss für eine möglichst gleichbleibende, zügige und homogene Vermischung gesorgt werden. Dabei sind Temperaturerhöhung und Auspressdruck möglichst gering zu halten.

Der Erfindung liegt die Aufgabe zugrunde, einen gegenüber dem Stand der Technik verbesserten dynamischen Mischer zu schaffen.

Diese Aufgabe wird gelöst durch einen dynamischen Mischer gemäß dem Hauptanspruch. Vorteilhafte Weiterbildungen sind Gegenstand der abhängigen Ansprüche.

Demnach betrifft die Erfindung einen dynamischen Mischer für die Komponenten viskoser Massen, insbesondere für die Komponenten von zahnärztlichen Abdruckmassen, mit einem Mischrohr und einem darin angeordneten, antreibbaren Rotor, wobei das Mischrohr an seinem ersten Ende eine Stirnwand mit wenigstens zwei Einlassöffnungen für die Komponenten und an seinem anderen Ende eine Auslassöffnung für das Gemisch aufweist, wobei der Rotor eine Rotorscheibe mit wenigstens einem zur Stirnwand gerichteten Mitnahmeelement und wenigstens einer Rotorscheibenöffnung zum Durchtritt der Komponenten zur von der Stirnwand abgewandten Seite der Rotorscheibe aufweist, wobei an der Rotornabe zwischen Rotorscheibe und Auslassöffnung des Mischrohrs wenigstens ein Mischelement angeordnet ist und wobei an der Stirnwand zur Rotorscheibe hin wenigstens ein vorstehender Stift angeordnet ist und das wenigstens eine Mitnahmeelement wenigstens eine Ausnehmung für den wenigstens einen Stift aufweist.

Das Mischrohr kann an seinem ersten Ende mit einem Behälter mit Ausgabeöffnungen und einem Ausgabegerät für die Komponenten verbunden werden. Aufgrund des wenigstens einen Mitnahmeelements folgen bei dem erfindungsgemäßen Mischer die durch die Einlassöffnungen eintretenden Komponenten zunächst der Rotation des Rotors. Durch diese Mitnahme wird die durch eine erste Einlassöffnung eingetretene erste Komponente an der Einlassöffnung für eine weitere Komponente vorbeigeführt. Die erste Komponente wird dabei mit der durch die weitere Einlassöffnung eintretenden Komponente vermischt, womit zu diesem Zeitpunkt ein noch sehr heterogenes Gemisch der einzelnen Komponenten vorliegt. Werden die Komponenten dem Mischer weiter zugeführt, füllt sich im Wesentlichen zunächst der Bereich zwischen Stirnwand und Rotorscheibe vollständig, bevor anschließend das beschriebene Gemisch durch die wenigstens eine Rotorscheibenöffnung in der Rotorscheibe gedrückt wird. Im Bereich zwischen Rotorscheibe und Auslassöffnung des Mischrohrs wird das Gemisch durch das wenigstens eine Mischelement weiter homogenisiert, bevor es an der Auslassöffnung austritt.

Der Erfindung liegt die Erkenntnis zugrunde, dass die homogene Vermischung der einzelnen Komponenten auch über einen breiten Viskositätsbereich verbessert werden kann, wenn das regelmäßig vorliegende unterschiedliche Fließverhalten der einzelnen zu mischenden Komponenten zu Beginn des Mischvorgangs weitestgehend ausgeglichen wird. Dieser Ausgleich wird durch das Zusammenwirken des erfindungsgemäßen wenigstens einen, zur Rotorscheibe hin gerichteten Stifts an der Stirnwand und des wenigstens einen Mitnahmeelements im Bereich der wenigstens einen Ausnehmung erreicht. Indem das wenigstens eine Mitnahmeelement eine Aufnehmung aufweist, durch die der genannte wenigstens eine Stift bei Rotation des Rotors hindurchgleitet, wird die in Rotationsrichtung vor dem Mitnahmeelement befindliche Masse geschert. Dadurch kann deren Viskosität reduziert und somit die Durchmischbarkeit mit weiteren Komponenten verbessert werden. Das so entstandene Gemisch gelangt dann über die wenigstens eine Rotorscheibenöffnung zu dem wenigstens einen Mischelement und wird dort weiter gemischt. Das homogenisierte Gemisch tritt anschließend aus der Auslassöffnung des Mischers aus.

Durch die erfindungsgemäße Anordnung von wenigstens einem Stift an der Stirnwand kann die Homogenität des aus der Auslassöffnung des Mischers heraustretenden Gemisches gegenüber einem Mischer ohne entsprechende Stifte deutlich verbessert werden. Gleichzeitig wird die Temperatur der Komponenten bzw. des Gemischs nicht wesentlich erhöht.

Die Verbesserung der Durchmischbarkeit kann an einem Beispiel verdeutlicht werden: Bei einer zahnärztlichen Abdruckmasse müssen bspw. eine Basispaste und eine Katalysatorpaste in einem vorgegebenen Verhältnis - z. B. 5:1 - miteinander vermischt werden. Dabei strömen die genannten Pasten durch verschieden große (5:1) Einlassöffnungen in einen dynamischen Mischer. Bei Verwendung eines erfindungsgemäßen Mischers kann dabei eine bei Rotation des Rotors durch ein Mitnahmeelement mitgeführte Menge an Basispaste durch den wenigstens einen erfindungsgemäß vorgesehenen Stift geschert werden, bevor diese Menge an Basispaste an der Einlassöffnung für die Katalysatorpaste vorbeigeführt wird. Dadurch wird die Viskosität der Basispaste reduziert und dadurch die Durchmischbarkeit mit der Katalysatorpaste verbessert.

Es ist bevorzugt, wenn der wenigstens eine Stift eine Länge aufweist, die wenigstens 2/3 des Abstands der Stirnwand zur Rotorscheibe beträgt. Weiter bevorzugt erstreckt sich der wenigstens eine Stift bis zur Rotorscheibe. Besonders bevorzugt sind die Höhe des wenigstens einen Mitnahmeelements der Rotorscheibe und die Länge des wenigstens einen Stifts im Wesentlichen gleich.

Bevorzugt beträgt der Abstand zwischen Stirnwand und Rotorscheibe im Wesentlichen mindestens 5 %, vorzugweise mindestens 10 %, weiter vorzugsweise 10 bis 30 % der Gesamtlänge des Mischrohrs.

Es ist bevorzugt, wenn mehr als ein Stift an der Stirnwand vorgesehen ist. Durch eine Mehrzahl von Stiften kann die Viskosität einer Masse in größerem Maße reduziert werden und/oder können Viskositätsunterschiede der Komponenten besser ausgeglichen werden als durch einen einzelnen Stift. Die Stifte oder zumindest Gruppen von Stiften können dabei in jeweils gleichem Abstand zur Achse des Rotors angeordnet sein. Dies bietet den Vorteil, dass alle Stifte oder zumindest die Stifte einer Gruppe durch dieselbe Ausnehmung geführt werden können.

Es ist bevorzugt, wenn der wenigstens eine Stift in Drehrichtung des Rotors zwischen einer ersten größeren und einer zweiten kleineren Einlassöffnung angeordnet ist. Durch eine entsprechende Anordnung wird die Viskosität der durch die erste Einlassöffnung eintretenden Komponente reduziert, bevor dieser Komponente die zweite oder weitere Komponenten hinzugefügt werden. Wird der Mischer für zahnärztliche Abdruckmassen verwendet, ist die erste größere Einlassöffnung vorzugsweise für die Basispaste, die zweite kleinere Einlassöffnung bevorzugt für die Katalysatorpaste vorgesehen.

Das von der Achse des Rotors entfernte Ende des wenigstens einen Mitnahmeelements ist vorzugsweise in Drehrichtung gebogen. Das genannte Ende des wenigstens einen Mitnahmeelements ist also schaufelförmig ausgebildet, sodass die in der Drehrichtung des Rotors vor einem Mitnahmeelement befindliche Masse im Bereich des schaufelförmig ausgestalteten Endes in Richtung der Achse des Rotors gedrängt wird.

Die wenigstens eine Rotorscheibenöffnung zum Durchtritt der vorgemischten Komponenten zur von der Stirnwand abgewandten Seite der Rotorscheibe ist bevorzugt ein radial angeordneter Schlitz. Auf der von der Stirnwand abgewandten Seite der Rotorscheibe ist an der Rotornabe weiter vorzugsweise wenigstens ein mit einem Schlitz im Wesentlichen fluchtender Ausleger angeordnet. Das Komponentengemisch, welches durch die Rotorscheibenöffnung hindurchtritt, wird durch den Ausleger umgelenkt und geschert. Es ist bevorzugt, wenn die Anzahl der Ausleger der Anzahl der Rotorscheibenöffnung entspricht.

Es ist bevorzugt, wenn das wenigstens eine Mischelement als von der Rotornabe abstehender Mischflügel ausgestaltet ist, der sich bis zur Innenwand des Mischrohrs erstreckt. Dabei verläuft die in Drehrichtung des Rotors vordere Kante des Mischflügels vorzugsweise parallel zu der hinteren Kante. Vorzugsweise ist mehr als ein Mischelement vorgesehen. Die Mischelemente sind dann bevorzugt in mehreren in axialer Richtung der Achse des Rotors beabstandeten Mischelementgruppen angeordnet, wobei die Mischelemente einer Mischelementgruppe in einer Ebene senkrecht zur Achse des Rotors angeordnet sind.

In einer Mischelementengruppe kann ein Umlenkelement vorgesehen sein. Das Umlenkelement kann dabei zwischen der vorderen Kante eines ersten Mischelements und der hinteren Kante des benachbarten Mischelements angeordnet sein und die freie Fläche zwischen den beiden Mischelementen verkleinern. Das parallel zur Achse des Rotors auf das Umlenkelement auftreffende Gemisch strömt dadurch verstärkt in Richtung des benachbarten Mischelements. Alternativ kann ein Umlenkelement auch losgelöst von den Mischelementen ausgestaltet sein, d. h. eine Formgebung aufweisen, die unabhängig von Mischelementen ist. Vorzugsweise umfasst die der Auslassöffnung des Mischrohrs nächstgelegene Mischelementgruppe kein Umlenkelement.

Der erfindungsgemäße Mischer wird bevorzugt für zahnärztliche Abdruckmassen aller Typen (0-3) verwendet. Zur Erläuterung dieser Verwendung wird auf die vorstehenden Ausführungen verwiesen. Die zahnärztliche Abdruckmasse weist dabei vorzugweise eine Basispaste und eine Katalysatorpaste auf.

Der erfindungsgemäße Mischer bewirkt insbesondere sowohl eine gute Durchmischung hochviskoser Pasten (bspw. elastomere Abformmassen des Typs 0, ISO 4823) bei relativ geringen Staudrücken als auch niedrigviskoser Pasten (bspw. elastomere Abformmassen des Typs 3, ISO 4823). Weiterhin werden auch stark strukturviskose und thixotrope Komponenten verbessert vermischt. Der Mischer ist dadurch universell, d.h. für eine große Bandbreite sehr unterschiedlicher Materialien einsetzbar. Ein Anwender kann dadurch einen Mischer für alle in der täglichen Praxis benötigten Materialien verwenden, wodurch die potenzielle Fehlerquelle der Auswahl des richtigen Mischers beseitigt wird.

Die Erfindung wird nun anhand einer vorteilhaften Ausführungsform unter Bezugnahme auf die beigefügten Zeichnungen beispielhaft beschrieben. Es zeigen:
Figur 1: eine erste Ausführungsform eines erfindungsgemäßen dynamischen Mischers;
Figur 2: eine Detaildarstellung der Stirnwand des dynamischen Mischers aus Figur 1;
Figur 3: eine Draufsicht des Rotors des dynamischen Mischers aus Figur 1; und
Figur 4: eine Seitenansicht sowie vier Schnittansichten des Rotors des dynamischen Mischers aus Figur 1.

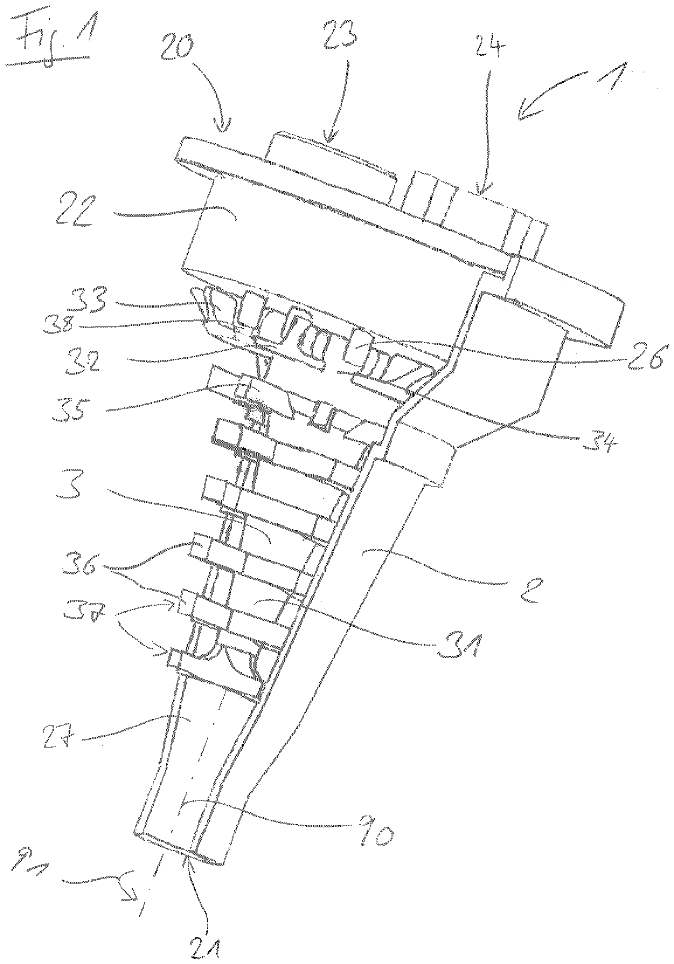

In Figur 1 ist ein erfindungsgemäßer dynamischer Mischer 1 dargestellt, wobei das Mischrohr 2 nur teilweise dargestellt ist, um das Innere des dynamischen Mischers zu zeigen.

Der Mischer 1 umfasst ein Mischrohr 2 und einen darin angeordneten Rotor 3, der um die Achse 90 drehbar gelagert ist. Der Rotor 3 weist eine bevorzugte vorgegebene Drehrichtung auf, die durch den Pfeil 91 angedeutet ist.

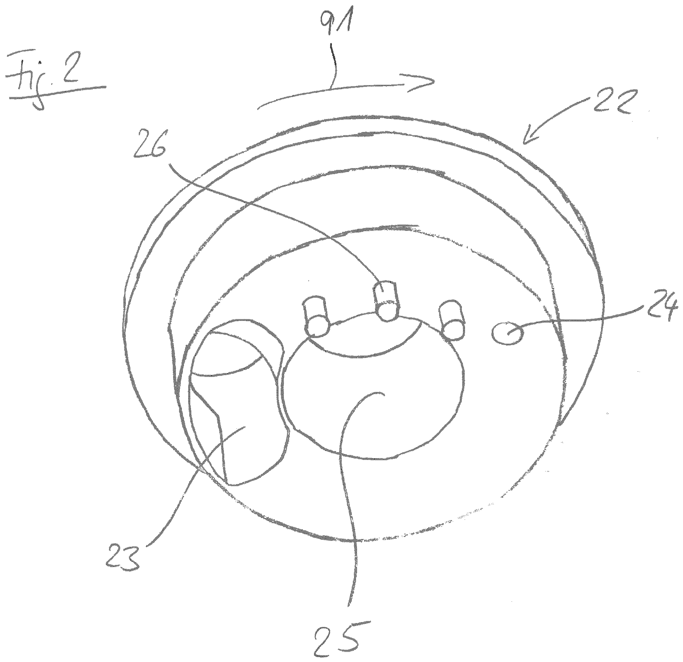

Das Mischrohr 2 ist an seinem ersten Ende 20 zur Verbindung mit einer Ausgabeanordnung (bspw. MixStar, DMG; Pentamix, 3M) umfassend einen Behälter mit Ausgabeöffnungen und ein Ausgabegerät (nicht dargestellt) für die zwei Komponenten einer zahnärztlichen Abdruckmasse ausgebildet und weist an seinem anderen Ende eine Auslassöffnung 21 auf. An dem ersten Ende 20 ist eine Stirnwand 22 vorgesehen, die eine erste und eine zweite Einlassöffnung 23, 24 aufweist (vgl. Figur 2). Die erste Einlassöffnung 23 ist dabei als Einlassöffnung für die Basispaste einer zahnärztlichen Abdruckmasse ausgebildet, während die zweite Einlassöffnung 24 für die Katalysatorpaste der Abdruckmasse ausgebildet ist. Da das Mischungsverhältnis bei dem dargestellten Mischer 1 ungefähr 5:1 beträgt, ist die erste Einlassöffnung 23 deutlich größer als die zweite Einlassöffnung 24. Ebenfalls in der Stirnwand 22 ist eine Öffnung 25 zur Durchführung des Rotors 3 vorgesehen.

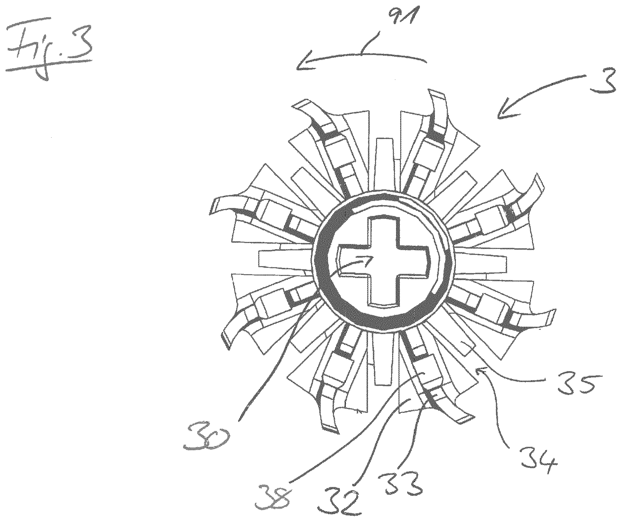

Der Rotor 3 ist über eine an dem ersten Ende 20 des Mischrohrs 2 befindliche Kopplung 30 (vgl. Figur 3) mit einem Antriebselement (nicht dargestellt) koppelbar. Der Rotor 3 ist dazu durch die Öffnung 25 geführt und in dieser Öffnung 25 auch gelagert. Das Antriebselement kann insbesondere Teil des Ausgabegerätes sein und den Rotor 3 in die vorgegebene Drehrichtung 91 antreiben.

Der Rotor 3 weist eine an der Rotornabe 31 angeordnete Rotorscheibe 32 mit zur Stirnwand 22 gerichteten Mitnahmeelementen 33 auf, wobei die äußeren Enden der einzelnen Mitnahmeelemente 33 schaufelförmig in Drehrichtung 91 des Rotors 3 umgebogen sind. Zwischen den einzelnen Mitnahmeelementen 33 sind in radialer Richtung spaltförmige Rotorscheibenöffnungen 34 vorgesehen. Auf der von der Stirnwand 22 abgewandten Seite der Rotorscheibe 32 sind Ausleger 35 an der Rotornabe 31 vorgesehen, die mit den Rotorscheibenöffnungen 34 im Wesentlichen fluchten.

Weiter zur Auslassöffnung 21 des Mischrohrs 2 hin sind Mischelemente 36 an der Rotornabe 31 vorgesehen, wobei die Mischelemente 36 in fünf Mischelementgruppen 37 angeordnet sind, bei denen alle zugehörigen Mischelemente 36 in einer Ebene senkrecht zur Achse 90 des Rotors 3 angeordnet sind. Die Mischelemente 36 erstrecken sich - wie auch die Mitnahmeelemente 33 und die Ausleger 35 - jeweils von der Rotornabe 31 des Rotors 3 bis zu Innenwand 27 des Mischrohrs 2.

An der Stirnwand 22 sind in Drehrichtung 91 des Rotors 3 gesehen zwischen der ersten und der zweiten Einlassöffnung 23, 24 drei Stifte 26 vorgesehen, die in Richtung der Rotorscheibe 32 ragen. Der Bereich weiter in Drehrichtung des Rotors 3 zwischen der zweiten und der ersten Einlassöffnung 24, 23 ist stiftfrei. Die Stifte 26 sind dabei alle im gleichen Abstand zur Achse 90 des Rotors 3 angeordnet. Die Mitnahmeelemente 33 am Rotor 3 weisen Aufnehmungen 38 auf, durch die die aus der Stirnwand 22 hervorstehenden Stifte 26 bei Rotation des Rotors 3 hindurchgleiten können. Die Stifte 26 behindern die Rotation des Rotors 3 um seine Achse 90 demnach also nicht.

Die Funktionsweise des dargestellten dynamischen Mischers 1 wird nun anhand einer beispielhaften Verwendung dargestellt. In diesem Beispiel wird der Mischer 1 zur Anmischung einer zahnärztlichen Abdruckmasse verwendet, die aus zwei Komponenten - einer Basispaste und eine Katalysatorpaste - besteht. Die beiden Komponenten sollen dabei in einem Verhältnis von 5:1 gemischt werden, wobei die Basispaste üblicherweise eine deutlich höhere Viskosität als die Katalysatorpaste aufweist.

Der dynamische Mischer 1 wird an dem ersten Ende 20 des Mischrohrs 2 mit Ausgabeöffnungen und einem Ausgabegerät für die beiden Komponenten einer zahnärztlichen Abdruckmasse verbunden. Die Verbindung ist dergestalt, dass das Ausgabegerät die erste Komponente - die Basispaste - durch die erste Einlassöffnung 23 und die zweite Komponente - die Katalysatorpaste - durch die zweite Einlassöffnung 24 in den Mischer 1 drückt. Gleichzeitig wird eine Antriebseinheit des Ausgabegerätes über die Kopplung 30 derart mit dem Rotor 3 des Mischers 1 verbunden, dass die Antriebseinheit den Rotor 3 in die vorgegebene Drehrichtung 91 antreiben kann.

Das Ausgabegerät bringt die Basispaste durch die erste größere Einlassöffnung 23 in den Mischer 1 ein. Dort wird sie durch die Mitnahmeelemente 33 des durch die Antriebseinheit des Ausgabegerätes angetriebenen Rotors mitgenommen und an den Stiften 26 vorbei in Richtung zur zweiten kleineren Einlassöffnung 24 hin gefördert. Durch die Stifte 26, die durch die Ausnehmungen 38 in den Mitnahmeelementen 33 hindurchgleiten können, wird die Basispaste geschert, wodurch sich deren Viskosität reduziert.

Über die zweite Einlassöffnung 24 wird die Katalysatorpaste hinzugefügt, die sich aufgrund der Reduzierung der Viskosität der Basispaste besser mit dieser vermengt. Das zu diesem Zeitpunkt noch eher heterogene Gemisch aus Basispaste und Katalysatorpaste gelangt dann durch die Rotorscheibenöffnungen 34 vorbei an den Auslegern 35 zu den Mischelementen 36. Durch die in Mischelementgruppen 37 angeordneten Mischelemente 36 werden Basispaste und Katalysatorpaste weiter miteinander vermischt, dass am Ende des Mischrohrs 2 ein homogenes Gemisch aus der Auslassöffnung 21 austritt. Das austretende Gemisch ist dabei derart homogenisiert, dass es als zahnärztliche Abdruckmasse direkt verwendbar ist.

Durch den erfindungsgemäßen Mischer wird bei hervorragender Homogenisierung weder die Temperatur noch der Auspressdruck der Komponenten bzw. des Gemischs auch im Vergleich zu anderen aus dem Stand der Technik bekannten dynamischen Mischern merklich erhöht, sodass die vorgegebenen Verarbeitungszeiten und Erhärtungszeiten der Abdruckmassen gewährleistet sind.

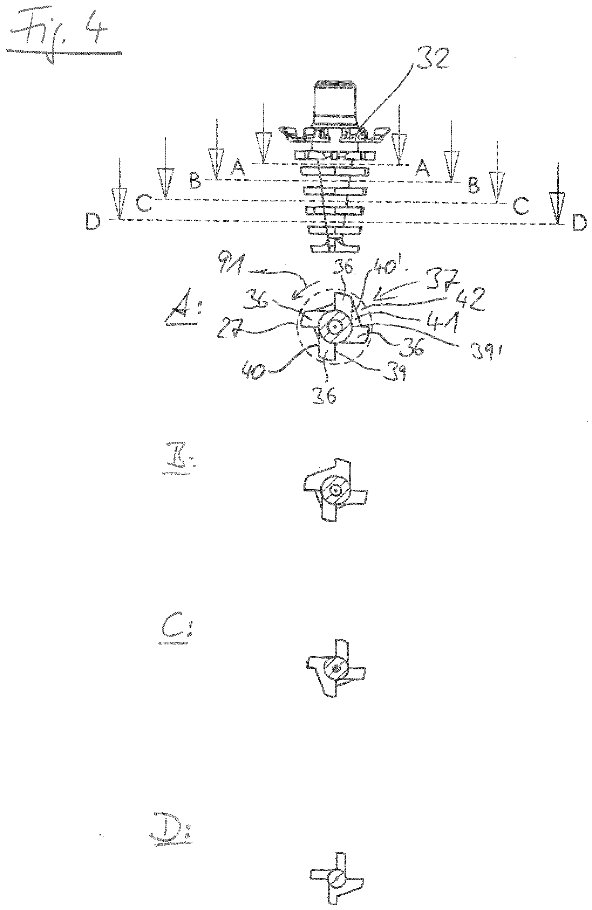

In Figur 4 sind weitere Details des Rotors 3 dargestellt, wobei die Figur neben einer Seitenansicht des Rotors 3 noch vier Schnittdarstellungen A-D umfasst. In den Schnittdarstellungen A-D sind jeweils die Mischelemente 36 der von der Rotorscheibe 32 aus gesehenen ersten vier Mischelementgruppen 37 gezeigt.

Jede Mischelementgruppe 37 umfasst vier Mischelemente 36, die gleichmäßig über den Umfang der Rotornabe 31 verteilt angeordnet sind. Bei den Mischelementen 36 ist die in Drehrichtung 91 gesehene vordere Kante 39 parallel zur hinteren Kante 40. Weiterhin erstrecken sich die Mischelemente 36 jeweils bis zur Innenwand 27 des Mischrohrs 2, die in Figur 4A beispielhaft durch eine gestrichelte Linie dargestellt ist.

Bei den in den Schnittdarstellungen der Figur 4 gezeigten Mischelementgruppe 37 ist jeweils zwischen zwei Mischelementen 36 ein Umlenkelement 41 vorgesehen. Das Umlenkelement 41 ist dabei zwischen der vorderen Kante 39' eines ersten Mischelements 36 und hinteren Kante 40' des benachbarten Mischelements 36 angeordnet. Durch das Umlenkelement 41 wird die freie Fläche zwischen diesen beiden Mischelementen 36 verkleinert.

Selbstverständlich muss das Umlenkelement 41 nicht zwischen zwei Mischelementen 36 angeordnet werden. Das Umlenkelement 41 kann auch von den Mischelementen 36 losgelöst ausgestaltet sein.

Die von der von der Rotorscheibe 32 aus gesehene fünfte und letzte Mischelementgruppe 37 umfasst kein Umlenkelement 41.

## Patentansprüche

1. Dynamischer Mischer (1) für die Komponenten viskoser Massen, insbesondere für die Komponenten von zahnärztlichen Abdruckmassen, mit einem Mischrohr (2) und einem darin angeordneten, antreibbaren Rotor (3), wobei das Mischrohr (2) an seinem ersten Ende (20) eine Stirnwand (22) mit wenigstens zwei Einlassöffnungen (23, 24) für die Komponenten und an seinem anderen Ende eine Auslassöffnung (21) für das Gemisch aufweist, wobei der Rotor (3) eine Rotorscheibe (32) mit wenigstens einem zur Stirnwand (22) gerichteten Mitnahmeelement (33) und wenigstens einer Rotorscheibenöffnung (34) zum Durchtritt der Komponenten zur von der Stirnwand (22) abgewandten Seite der Rotorscheibe (32) aufweist, wobei an der Rotornabe (31) zwischen Rotorscheibe (32) und Auslassöffnung (21) des Mischrohrs (2) wenigstens ein Mischelement (36) angeordnet ist,
**dadurch gekennzeichnet, dass**
an der Stirnwand (22) zur Rotorscheibe (32) hin wenigstens ein vorstehender Stift (26) angeordnet ist und das wenigstens eine Mitnahmeelement (33) wenigstens eine Ausnehmung (38) für den wenigstens einen Stift (26) aufweist.

2. Mischer nach Anspruch 1,
**dadurch gekennzeichnet, dass**
der wenigstens eine Stift (26) eine Länge aufweist,
die wenigstens 2/3 des Abstands der Stirnwand (22) zur Rotorscheibe (32) beträgt, oder sich der wenigstens eine Stift (26) bis zur Rotorscheibe (32) erstreckt.

3. Mischer nach einem der vorhergehenden Ansprüche,
**dadurch gekennzeichnet, dass**
die Höhe des wenigstens einen Mitnahmeelements (33) der Rotorscheibe (32) und die Länge des wenigstens einen Stifts (26) im Wesentlichen gleich sind.

4. Mischer nach einem der vorhergehenden Ansprüche,
**dadurch gekennzeichnet, dass**
der Abstand zwischen Stirnwand (22) und Rotorscheibe (32) mindestens 5 %, vorzugweise mindestens 10 %, weiter vorzugsweise 10 bis 30 % der Gesamtlänge des Mischrohrs (2) beträgt.

5. Mischer nach einem der vorhergehenden Ansprüche,
**dadurch gekennzeichnet, dass**
mehr als ein Stift (26) an der Stirnwand (22) vorgesehen ist, wobei die Stifte (26) oder zumindest Gruppen von Stiften (26) in jeweils gleichem Abstand zur Achse (90) des Rotors (3) angeordnet sind.

6. Mischer nach einem der vorhergehenden Ansprüche,
**dadurch gekennzeichnet, dass**
der wenigstens eine Stift (26) in Drehrichtung (91) des Rotors (3) zwischen einer ersten größeren Einlassöffnung (23) und einer zweiten kleineren Einlassöffnung (24) angeordnet ist.

7. Mischer nach einem der vorhergehenden Ansprüche,
**dadurch gekennzeichnet, dass**
das von der Achse (90) des Rotors (3) entfernte Ende des wenigstens einen Mitnahmeelements (33) in Drehrichtung (91) umgebogen ist.

8. Mischer nach einem der vorhergehenden Ansprüche,
**dadurch gekennzeichnet, dass**
die wenigstens eine Rotorscheibenöffnung (34) ein radial angeordneter Schlitz ist, wobei vorzugsweise auf der von der Stirnseite (22) abgewandten Seite der Rotorscheibe (32) an der Rotornabe (31) wenigstens ein mit der wenigstens einem Schlitz fluchtender Ausleger (35) angeordnet ist.

9. Mischer nach einem der vorhergehenden Ansprüche,
**dadurch gekennzeichnet, dass**
mehr als ein Mischelement (36) vorgesehen ist und die Mischelemente (36) vorzugsweise in mehreren in axialer Richtung der Achse (90) des Rotors (3) beabstandeten Mischelementgruppen (37) angeordnet sind, wobei die Mischelemente (36) einer Mischelementgruppe (37) in einer Ebene senkrecht zur Achse (90) des Rotors (3) angeordnet sind.

10. Mischer nach Anspruch 9,
**dadurch gekennzeichnet, dass**
in einer Mischelementengruppe (37) ein Umlenkelement (41) vorgesehen ist, wobei das Umlenkelement (41) vorzugsweise eine Verbindungsfläche zweier benachbarter Mischelemente (36) ist und die freie Fläche zwischen diesen beiden Mischelementen (36) verkleinert ist.

11. Verwendung eines dynamischen Mischers nach einem der Ansprüche 1 bis 10 für zahnärztliche Abdruckmassen.

12. Verwendung nach Anspruch 11,
**dadurch gekennzeichnet, dass**
die zahnärztliche Abdruckmasse als erste Komponente eine Basispaste und als zweite Komponente eine Katalysatorpaste aufweist.

## Claims

1. Dynamic mixer (1) for the components of viscous compounds, in particular for the components of dental impression compounds, having a mixing tube (2) and, arranged therein, a drivable rotor (3), wherein the mixing tube (2) has at its first end (20) an end wall (22) having at least two inlet openings (23, 24) for the components, and at its other end an outlet opening (21) for the mixture, wherein the rotor (3) has a rotor disk (32) having at least one entraining element (33) that faces the end wall (22), and at least one rotor disk opening (34) for the components to pass through to the side of the rotor disk (32) remote from the end wall (22), wherein at least one mixing element (36) is arranged on the rotor hub (31) between the rotor disk (32) and the outlet opening (21) of the mixing tube (2),
**characterized in that**
at least one projecting pin (26) is arranged on the end wall (22) toward the rotor disk (32), and the at least one entraining element (33) has at least one recess (38) for the at least one pin (26).

2. Mixer according to Claim 1, **characterized in that** the at least one pin (26) has a length that is at least 2/3 of the spacing from the end wall (22) to the rotor disk (32), or the at least one pin (26) extends as far as the rotor disk (32).

3. Mixer according to one of the preceding claims, **characterized in that** the height of the at least one entraining element (33) of the rotor disk (32) and the length of the at least one pin (26) are substantially the same.

4. Mixer according to one of the preceding claims, **characterized in that** the spacing between the end wall (22) and the rotor disk (32) is at least 5%, preferably at least 10%, further preferably 10 to 30% of the total length of the mixing tube (2).

5. Mixer according to one of the preceding claims, **characterized in that** more than one pin (26) is provided on the end wall (22), wherein the pins (26) or at least groups of pins (26) are arranged in each case at the same spacing from the axis (90) of the rotor (3).

6. Mixer according to one of the preceding claims, **characterized in that** the at least one pin (26) is arranged, as seen in the direction of rotation (91) of the rotor (3), between a first, larger inlet opening (23) and a second, smaller inlet opening (24).

7. Mixer according to one of the preceding claims, **characterized in that** the end of the at least one entraining element (33) that is remote from the axis (90) of the rotor (3) is curved around in the direction of rotation (91).

8. Mixer according to one of the preceding claims, **characterized in that** the at least one rotor disk opening (34) is a radial slot, wherein preferably, on the side of the rotor disk (32) remote from the end wall (22), at least one arm (35) that is flush with the at least one slot is arranged on the rotor hub (31).

9. Mixer according to one of the preceding claims, **characterized in that** more than one mixing element (36) is provided and the mixing elements (36) are preferably arranged in a plurality of mixing element groups (37) that are spaced in the axial direction of the axis (90) of the rotor (3), wherein the mixing elements (36) of a mixing element group (37) are arranged in a plane perpendicular to the axis (90) of the rotor (3).

10. Mixer according to Claim 9, **characterized in that** a deflecting element (41) is provided in a mixing element group (37), wherein the deflecting element (41) is preferably a connecting surface between two adjacent mixing elements (36) and the free surface between these two mixing elements (36) is made smaller.

11. Use of a dynamic mixer according to one of Claims 1 to 10 for dental impression compounds.

12. Use according to Claim 11, **characterized in that** the dental impression compound has as the first component a base paste and as the second component a catalyst paste.

## Revendications

1. Mélangeur (1) dynamique pour les composants de masses visqueuses, en particulier pour les composants de masses d'empreintes de dentisterie, avec un tube mélangeur (2) et un rotor (3) qui y est disposé à l'intérieur et qui peut être entraîné, le tube mélangeur (2) présentant à sa première extrémité (20) une paroi frontale (22) avec au moins deux ouvertures d'entrée (23, 24) pour les composants et, à son autre extrémité, une ouverture de sortie (21) pour le mélange, le rotor (3) présentant un disque de rotor (32) avec au moins un élément d'entraînement (33) dirigé vers la paroi frontale (22) et au moins une ouverture de disque de rotor (34) pour le passage des composants vers le côté du disque de rotor (32) éloigné de la paroi frontale (22), au moins un élément de mélange (36) étant disposé sur le moyeu de rotor (31) entre le disque de rotor (32) et l'ouverture de sortie (21) du tube mélangeur (2),
**caractérisé en ce**
**qu'**une broche (26) en saillie est disposée sur la paroi frontale (22) en direction du disque de rotor (32), et ce qu'au moins un élément d'entraînement (33) présente au moins un creux (38) pour la broche (26) au moins au nombre de un.

2. Mélangeur selon la revendication 1,
**caractérisé en ce que**
la broche (26) au moins au nombre de un présente une longueur qui est égale à au moins 2/3 de la distance entre la paroi frontale (22) et le disque de rotor (32), ou **en ce que** la broche (26) au moins au nombre de un s'étend jusqu'au disque de rotor (32).

3. Mélangeur selon l'une des revendications précédentes,
**caractérisé en ce que**
la hauteur de l'élément d'entraînement (33) au moins au nombre de un du disque de rotor (32) et la longueur de la broche (26) au moins au nombre de un sont essentiellement égales.

4. Mélangeur selon l'une des revendications précédentes,
**caractérisé en ce que**
la distance entre la paroi frontale (22) et le disque de rotor (32) est égale à au moins 5 %, de préférence égale à au moins 10 %, plus préférablement est comprise entre 10 et 30 % de la longueur totale du tube mélangeur (2).

5. Mélangeur selon l'une des revendications précédentes,
**caractérisé en ce**
**qu'**il est prévu plus d'une broche (26) sur la paroi frontale (22), les broches (26) ou au moins des groupes de broches (26) étant disposées respectivement à la même distance par rapport à l'axe (90) du rotor (3).

6. Mélangeur selon l'une des revendications précédentes,
**caractérisé en ce que**
la broche (26) au moins au nombre de un est, dans le sens de rotation (91) du rotor (3), disposée entre une première ouverture d'entrée (23) plus grande et une deuxième ouverture d'entrée (24) plus petite.

7. Mélangeur selon l'une des revendications précédentes,
**caractérisé en ce que** l'extrémité de l'élément d'entraînement (33) au moins au nombre de un qui est éloignée de l'axe (90) du rotor (3) dans le sens de rotation (91) est recourbée.

8. Mélangeur selon l'une des revendications précédentes,
**caractérisé en ce**
**que** l'ouverture de disque de rotor (34) au moins au nombre de un est une fente disposée radialement, au moins un bras (35) en affleurement avec la fente au moins au nombre de un étant disposé de préférence sur le côté du disque de rotor (32) éloigné du côté frontal (22) sur le moyeu de rotor (31).

9. Mélangeur selon l'une des revendications précédentes,
**caractérisé en ce**
**qu'**il est prévu plus d'un élément mélangeur (36), et les éléments mélangeurs (36) sont disposés de préférence dans plusieurs groupes d'éléments mélangeurs (37) espacés dans la direction axiale de l'axe (90) du rotor (3), les éléments mélangeurs (36) d'un groupe d'éléments mélangeurs (37) étant disposés dans un plan perpendiculairement à l'axe (90) du rotor (3).

10. Mélangeur selon la revendication 9,
**caractérisé en ce**
**qu'**un élément de déviation (41) est prévu dans un groupe d'éléments mélangeurs (37), l'élément de déviation (41) étant de préférence une surface de raccordement de deux éléments mélangeurs (36) voisins, et la surface libre entre ces deux éléments mélangeurs (36) étant réduite.

11. Utilisation d'un mélangeur dynamique selon l'une des revendications 1 à 10 pour des masses d'empreintes de dentisterie.

12. Utilisation selon la revendication 11,
**caractérisée en ce que**
la masse d'empreintes de dentisterie présente une pâte de base en tant que premier composant et une pâte de catalyseur en tant que deuxième composant.
